# DEMANDE DE BREVET EUROPEEN

(11) **EP 2 875 726 A1**
(43) Date de publication de la demande: **27.05.2015**
(21) Numéro de dépôt: 13192762.6
(22) Date de dépôt: 13.11.2013
(51) Int. Cl.: A01N 25/00, A01N 43/40, A01N 51/00, A61K 9/00

(54) **Nouvelles applications de compositions vétérinaires dans le traitement contre les parasites**

(71) Demandeur: Ceva Animal Health, Lenexa, KS 66215 (US)
(72) Inventeur: Hodgkins, Elizabeth, Yorba Linda, CA California 92887 (US)
(74) Mandataire: Becker, Philippe

(57) **Abrégé**

La présente invention est relative à des compositions et leurs procédés ou méthodes d'administration dans le domaine de la parasitologie. Elle concerne plus spécifiquement une nouvelle utilisation d'une composition vétérinaire dans le traitement contre un ectoparasite ou un endoparasite animal administrée par voie externe sur la peau d'un animal par application de la composition à rebrousse-poil, et plus particulièrement, l'application en continu à rebrousse-poil de la composition à partir de la base de la queue, le long de l'épine dorsale jusqu'au niveau des omoplates.

## Description

La présente invention concerne des compositions et leurs procédés d'administration dans le domaine de la parasitologie. L'invention concerne plus spécifiquement l'utilisation d'une composition vétérinaire dans le traitement contre un ectoparasite ou un endoparasite animal, ladite composition étant administrée par voie externe en l'appliquant à rebrousse-poil sur la peau d'un animal. Les compositions vétérinaires de l'invention peuvent être particulièrement appliquées à rebrousse-poil sur la peau d'un chien ou d'un chat dans le traitement contre un arthropode tel qu'une puce, un moustique, un phlébotome, une mouche ou une tique et/ou dans le traitement contre un nématode, un cestode ou un trématode.

### ARRIERE-PLAN TECHNOLOGIQUE DE L'INVENTION

Les animaux, et plus particulièrement les animaux de compagnie tels que les chiens ou les chats, peuvent servir d'hôtes pour un grand nombre de parasites internes (endoparasites) et externes (ectoparasites). L'infection de ces animaux par les parasites est hautement indésirable et peut ainsi causer de l'inconfort, des troubles de performance et des troubles de santé pouvant même aller jusqu'à la mort chez l'animal infecté. Les animaux infectés peuvent également être porteurs de maladies et présentent alors un risque zoonotique réel pour l'être humain en contact avec ces animaux.

Avec un nombre d'animaux domestiques en constante augmentation dans notre société, la lutte contre les parasites, chez les animaux infectés ou susceptibles d'être infectés, est devenue un axe de recherche primordial en santé animale.

Les traitements traditionnels utilisés dans le traitement contre les parasites se présentent sous différentes formes et incluent des traitements sous forme de shampoing, de colliers antiparasitaires, de traitements ingérés par voie orale, ou encore des compositions destinées à traiter l'environnement animal.

Cependant, la plupart de ces traitements offre des inconvénients considérables. Par exemple, les traitements de shampoing exigent une application sur toute la surface de la peau de l'animal et sont souvent désagréables pour celui-ci. Les traitements utilisant des shampoings ne fournissent qu'un traitement de courte durée et transitoire. Quant aux colliers antiparasitaires, ils doivent être portés pour une période de temps assez longue pouvant durer plusieurs mois ce qui peut se révéler inconfortable pour l'animal et peuvent se détacher interrompant alors le traitement. Les traitements administrés par voie orale ont, pour leur part, tendance à augmenter le risque d'effets secondaires et sont souvent plus difficiles à administrer à l'animal. Enfin, les traitements de l'environnement de l'animal sont souvent indésirables pour l'utilisateur car ils engendrent des dégradations matérielles (décoloration du mobilier, tapis, literie...) et des odeurs désagréables.

Un traitement alternatif contre les parasites est d'administrer à l'animal par voie topique la composition antiparasitaire. Plus particulièrement, chez les animaux de compagnie notamment les chiens et les chats, les compositions antiparasitaires sont généralement appliquées par dépôt cutané (en anglais "spot on" ou "pour on"). Ce type d'application « spot-on » consiste à appliquer sur une peau sèche, tout en écartant les poils pour rendre bien visible la peau, une composition sous forme de gouttes sur une zone de surface inférieure à 10 cm², notamment comprise entre 5 et 10 cm². En particulier, et le plus souvent, la composition est appliquée en un à quatre points sur le dos de l'animal, et de préférence localisée entre les épaules de l'animal. Après dépôt, la composition diffuse, notamment sur tout le corps de l'animal puis sèche, et ne modifie donc ni l'aspect ni le toucher du pelage.

Les compositions « spot-on » sont particulièrement avantageuses par leur efficacité, leur rapidité d'action, ainsi que par l'aspect agréable du poil des animaux après application et séchage.

Différentes compositions utilisées *via* une application « spot-on » dans le traitement contre les parasites ont été déjà développées en agissant sur la nature et la quantité de l'agent actif antiparasitaire. A titre d'exemples, on peut citer les demandes internationales WO 2007/018659, WO 2008/048963, WO 2004/030457, WO 97/36485, et la demande française FR 2 504 779. Cependant, les traitements illustrés dans ces demandes doivent être de longue durée et nécessitent que l'agent actif présente une durée d'action prolongée avant que tous les parasites concernés soient efficacement éliminés. Pour résoudre ces problèmes concernant l'intervalle entre deux traitement, la demande internationale WO 2011/038024 propose une composition « spot-on » comprenant comme agents antiparasitaires, 8 à 11 % en poids de fipronil et 3 à 16 % d'un pyrethroïde en poids, par rapport au poids total de la composition. Cette composition particulière permet d'obtenir rapidement un grand taux de destruction des parasites et de limiter la fréquence du traitement *via* une application de type « spot-on ».

Cependant, l'application de type « spot-on » présente certains inconvénients préjudiciables. En effet, seul le produit en contact direct avec la peau sera efficace d'où la nécessité d'écarter efficacement les poils au niveau du dépôt du produit. Il existe également une certaine imprécision sur les doses administrées par cette application. Le produit peut facilement se perdre en coulant sur le poil d'où la nécessité d'effectuer plusieurs dépôts en quantité importante sur le dos de l'animal pour être certain d'administrer une dose efficace. L'importante quantité de produit déposé à différents points sur le dos de l'animal peut induire des réactions de type inflammatoire (érythème, prurit...). Par ailleurs, la quantité de produit non administrée se retrouvant sur les poils de l'animal peut engendrer également des risques pour la santé et la sécurité de l'utilisateur.

Ainsi, il persiste aujourd'hui, dans le domaine de la santé animale et plus particulièrement en parasitologie, un besoin de nouvelles stratégies d'administration de compositions antiparasitaires permettant d'améliorer les traitements tout en maintenant, pour l'utilisateur, une sécurité maximale.

Les inventeurs ont mis au point une nouvelle approche pour le traitement des animaux qui consiste à appliquer une composition vétérinaire à rebrousse-poil sur la peau de l'animal. Les inventeurs ont montré que cette application à rebrousse-poil présente des avantages considérables pour les traitements contre les parasites, et notamment, par rapport à l'application « spot-on », tels que la prévention des effets secondaires, la sécurité, l'efficacité et l'ergonomie.

### RESUME DE L'INVENTION

L'objet de la présente invention est de proposer une nouvelle méthode pour le traitement d'un animal non-humain contre un ectoparasite ou un endoparasite, comprenant une application par voie externe sur la peau d'un animal.

L'invention concerne plus particulièrement une composition vétérinaire antiparasitaire administrée par voie externe par application à rebrousse-poil sur la peau d'un animal. L'invention concerne également une méthode pour l'administration d'un agent vétérinaire à un animal comprenant l'application dudit agent par voie externe à rebrousse-poil. Un autre objet de l'invention réside dans une méthode améliorée de traitement antiparasitaire d'un animal par application d'un agent antiparasitaire, l'amélioration résidant dans l'application dudit antiparasitaire par voie externe à rebrousse-poil.

De préférence, la composition est appliquée à rebrousse-poil en continu à partir de la base de la queue, le long de l'épine dorsale jusqu'au niveau des omoplates de l'animal. Particulièrement, la composition est formulée sous forme de dose unitaire adaptée au poids et/ou à la taille de l'animal. La composition comprend avantageusement au moins un agent antiparasitaire, adapté au traitement contre un ectoparasite ou un endoparasite, préférentiellement choisi parmi un néonicotinoïde, un phénylpyrazole, un pyréthroïde, un régulateur de la croissance d'insectes (IGR) ou un isoxazoline. L'invention est préférentiellement adaptée au traitement d'animaux domestiques tels que des chiens et des chats.

### DESCRIPTION DETAILLEE DE L'INVENTION

La présente invention est relative à une nouvelle méthode de traitement contre un ectoparasite ou un endoparasite animal, par application d'un agent antiparasitaire par voie externe à rebrousse-poil sur la peau dudit animal.

La composition est appliquée de préférence en continu. Particulièrement, la composition est appliquée à rebrousse-poil en continu à partir de la base de la queue, le long de l'épine dorsale jusqu'au niveau des omoplates de l'animal.

### Application

Dans le contexte de l'invention, la composition est appliquée à rebrousse-poil sur la peau d'un animal. On entend par une application à rebrousse-poil, une application de la composition dans le sens contraire de l'implantation des poils sur la peau de l'animal. Pour les animaux concernés par l'invention, l'application à rebrousse-poil s'effectue généralement dans le sens partant de la base de la queue vers les omoplates de l'animal.

Avantageusement, la composition vétérinaire utilisée dans l'invention est appliquée à rebrousse-poil et en continu. L'application en continu de la composition est réalisée en maintenant en contact la composition avec la peau de l'animal, et ce jusqu'à ce que l'intégralité de la dose souhaitée de la composition soit administrée par voie externe sur la peau de l'animal. La notion « en continu » peut également être définie comme une succession infinie de points (spots).

L'application en continu de la composition peut être réalisée selon une trajectoire rectiligne. Dans un mode de réalisation préféré, la composition utilisée est appliquée à rebrousse-poil en continu à partir de la base de la queue, le long de l'épine dorsale jusqu'au niveau des omoplates de l'animal. Particulièrement, l'utilisateur maintient l'animal avec une de ses mains contre lui et applique la composition à rebrousse-poil en continu à l'aide de son autre main à partir de la base de la queue, le long de l'épine dorsale jusqu'au niveau des omoplates de l'animal.

L'application de la composition telle que définie ci-dessus peut être réalisée au moyen de tout dispositif comprenant un réservoir contenant la composition. Avantageusement, un dispositif muni d'un embout allongé et arrondi est bien adapté pour administrer par voie externe sur la peau d'un animal une composition utilisée dans le traitement contre un ectoparasite ou un endoparasite par une application de ladite composition à rebrousse-poil. Le dispositif muni d'un embout allongé et arrondi permet ainsi de prévenir tout risque de blessure pour l'animal durant l'application de la composition à rebrousse-poil.

La composition utilisée dans l'invention est préférentiellement formulée sous forme de dose unitaire adaptée au poids et/ou à la taille de l'animal, l'intégralité de la dose étant appliquée sur l'animal. Typiquement, les doses de composition varient de 0,1 à 100 mL, préférentiellement de 0,5 à 20 mL, et encore plus préférentiellement de 0,5 à 10 mL. Avantageusement, la composition est formulée sous forme de dose unitaire comprenant un volume de 8 mL, 4,7 mL, 3,6 mL, 1,6 mL ou 0,8 mL. Bien entendu, l'homme du métier saura adapter la dose à utiliser en fonction du type d'animal à traiter, de sa taille et/ou de son poids.

Dans le contexte de la présente invention, la composition utilisée est sous forme liquide.

L'invention est adaptée au traitement de tout animal, en particulier de tout mammifère non-humain.

Dans un mode de réalisation préféré, l'animal appartient au groupe des animaux de compagnie et est préférentiellement un chien ou un chat. Dans un autre mode de réalisation préféré, l'animal est une vache, un cheval, un cochon ou un mouton.

### Parasites / Agents antiparasitaires

Les parasites sont des organismes vivant aux dépens des autres organismes d'une espèce différente appelée hôte. Ils sont généralement beaucoup plus petits que leurs hôtes et s'en nourrissent. Certains parasites peuvent présenter un spectre d'action très large et se développer dans des organismes très différents de part leur espèce. Au contraire, certains parasites sont très spécifiques de l'hôte, c'est-à-dire qu'ils peuvent compléter leur cycle de vie que sur une ou deux espèces très proches de l'hôte. De nombreux parasites ne nuisent pas seulement à leurs hôtes en se nourrissant sur eux, mais transmettent aussi des maladies causées par des microorganismes tels que les virus ou les bactéries. Ils sont appelés vecteurs de ces maladies. On peut citer comme exemples de maladies transmises par les parasites, le paludisme, la fièvre jaune, la maladie du sommeil, la maladie de Chagas, l'onchocercose, la fièvre typhoïde, la peste, le virus de la variole...

Les parasites sont classés en deux classes selon qu'ils attaquent l'hôte à l'extérieur ou à l'intérieur de l'organisme. On parle de parasite externe ou d'ectoparasite lorsque celui-ci attaque l'hôte par l'extérieur et de parasite interne ou d'endoparasite lorsque celui-ci attaque l'hôte par l'intérieur.

A titre d'exemples d'ectoparasites, on peut citer tous les arthropodes parasitaires, notamment ceux appartement à la classe des insectes tels que les puces, les poux, les mouches, les phlébotomes et les moustiques ; et ceux appartenant à classe des acariens tels que les tiques et les mites. La composition de l'invention est utilisée dans le traitement d'un ectoparasite qui est préférentiellement un arthropode. L'arthropode est de préférence une puce, un moustique, un phlébotome, une mouche ou une tique.

A titre d'exemples d'endoparasites, on peut citer les vers parasites et ceux appartenant à la classe des nématodes, des cestodes ou des trématodes. La composition de l'invention est utilisée dans le traitement d'un endoparasite qui est préférentiellement un nématode, un cestode ou un trématode.

La composition utilisée dans l'invention comprend avantageusement au moins un agent antiparasitaire et un excipient vétérinairement acceptable.

Par excipient vétérinairement acceptable, on entend un excipient toléré par l'animal et qui n'engendre pas d'effets secondaires.

Comme indiqué précédemment, la composition est préférentiellement liquide, et de façon encore plus préférentielle une forme liquide comprenant des solvants organiques comme un alcool alkylique en C1-C4 tels que l'éthanol, l'isopropanol, le méthanol ; l'acétyltributylcitrate ; les esters d'acides gras tels que l'ester de diméthyle et l'adipate de diisobutyle; l'acétone, l'acétonitrile, l'alcool benzylique, le butyldiglycol, le diméthylacétamide, le diméthylformamide, le dipropylène glycol n-butyl éther, l'éthylène glycol monoéthyl éther, l'éthylène glycol éther monométhylique, le diéthylène glycol monoéthyl éther, le monomethylacetamide, le monométhyléther de dipropylèneglycol, les polyoxyéthylène-glycols liquides, le propylèneglycol, les 2-pyrrolidones comme la N-méthyl-pyrrolidone et le N-Octyl-2-pyrrolidone, le propylène carbonate, le diéthylène glycol monoéthyl éther, le dimethyl sulfoxide, l'éthylène glycol, le phtalate de diéthyle, l'éthoxydiglycol, ou leurs combinaisons. Dans un mode de réalisation préféré, le solvant organique comprend du N-méthyl-pyrrolidone et du N-Octyl-2-pyrrolidone.

L'agent antiparasitaire peut être tout agent actif capable de repousser, perturber, tuer ou détruire les parasites. Les agents antiparasitaires de l'invention peuvent être d'origine naturels ou chimiques et regroupés en deux classes selon la nature des parasites, telle que définie ci-dessus, sur lesquels ils agissent. Ainsi, on peut différencier les agents ectoparasiticides et les endoparasiticides.

Les ectoparasiticides sont actifs contre les parasites externes ou ectoparasites. A titre d'exemples, on peut citer les organochlorines, les organophospates, les carbamates, les amidines, les pyrethroïdes, les benzylurés, les isoxazolines, les phenylpyrazoles, les neonicotinoides, les spynosines, les régulateurs de la croissance d'insectes (IGR) tels que la cyromazine ou le dicyclanil, et les semicarbazones avec par exemple le métaflumizone.

Les néonicotinoides sont une classe d'ectoparasiticides introduite dans les années 90 et sont particulièrement actif contre les puces, les mouches et les poux. Les néonicotinoides, comme leur nom l'indique, sont des analogues de la nicotine et sont des agonistes des récepteurs nicotiniques de l'acétylcholine. Ils provoquent une forte stimulation des cellules nerveuses entrainant la paralysie puis la mort du parasite sans affecter les récepteurs de l'animal hôte les rendant relativement inoffensifs pour les mammifères et les humains. Comme exemple de néonicotinoide, on peut citer le dinotefuran qui est utilisé notamment via une application « spot-on » sur les chats et les chiens.

Les phénylpyrazoles sont également une classe d'ectoparasiticides introduite dans les années 90 et sont particulièrement actif contre les puces, les mouches, les tiques, les poux et les mites. A titre d'exemple, on peut citer le fipronil qui a été le premier phénylpyrazole introduit sur le marché grand public sous forme « spot-on ». Les phenylpyrazoles sont des inhibiteurs récepteurs GABA, l'acide gamma-aminobutyrique étant un neurotransmetteur du système nerveux central. Ils sont spécifiques des récepteurs GABA des invertébrés et sont donc inactifs vis-à-vis des mammifères. Tel le dinotefuran décrit ci-dessus, le fipronil est également couramment utilisé *via* des applications « spot-on » dans le traitement contre les ectoparasites.

Les isoxazolines sont une classe d'antiparasitaire pouvant traiter les ectoparasites. De nombreux analogues ont été développés pour leur action et on peut citer plus particulièrement, à titre d'exemples le 4-{5-[3-chloro-5-(trifluoromethyl)phenyl]-5-(trifluoromethyl)-4,5-dihydroisoxazol-3-yl}-N-{2-oxo-2-[(2,2,2 trifluoroethyl)amino]ethyl}naphthalene-1-carboxamide (afoxolaner), le 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide (fluranaler) ou le N-{2-chloro-{5-(3,5-dichlorophény 1)-5-trifluorométhyl-4,5-dihydroisoxazol-3-yeenzyl}cyclopropanecarboxylique.

Les endoparasiticides sont actifs contre les parasites internes ou endoparasites. A titre d'exemples, on peut citer les benzimidazoles, les imidazothiazoles, les tétrahydropyrimidines, les isoquinolines, les salicylanilides, les phénols halogénés, avec en particulier, le nitroxinil.

Certains agents antiparasitaires sont actifs à la fois contre les endoparasites et les ectoparasites. On peut citer par exemple, les lactones macrocycliques, les benzenesulphonamides, avec en particulier le clorsulon, et les aminoacétonitriles, avec en particulier le monepantel.

Dans le contexte de la présente invention, l'agent antiparasitaire est choisi parmi les lactones macrocycliques, les organochlorines, les organophosphates, les carbamates, les amidines, les pyrethroides, les benzylurés, les phenylpyrazoles, les neonicotinoides, les spynosines, les régulateurs de la croissance d'insectes (IGR), les benzimidazoles, les imidazothiazoles, les tétrahydropyrimidines, les isoquinolines, les isoxazolines, les salicylanilides, le clorsulon, le monepantel, le nitroxinil, la cyromazine, le dicyclanil, et le metaflumizone.

Dans un mode de réalisation particulier, l'agent antiparasitaire compris dans la composition utilisée dans l'invention est un neonicotinoide, de préférence le dinotefuran.

Dans un autre mode de réalisation particulier, l'agent antiparasitaire compris dans la composition est un phénylpyrazole, de préférence le fipronil.

Encore dans un autre mode de réalisation particulier, l'agent antiparasitaire compris dans la composition est un isoxazoline, de préférence le 4-{5-[3-chloro-5-(trifluoromethyl)phenyl]-5-(trifluoromethyl)-4,5-dihydroisoxazol-3-yl}-N-{2-oxo-2-[(2,2,2 trifluoroethyl)amino]ethyl}naphthalene-1-carboxamide, le 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide ou le ou le N-{2-chloro-{5-(3,5-dichlorophény)-5-trifluorométhyl-4,5-dihydroisoxazol-3-yeenzyl}cyclopropanecarboxylique.

Les différentes classes de parasites et classes d'agents antiparasitaires ainsi que les agents actifs commercialisés peuvent être retrouvés sur le site internet parasitipedia à l'adresse suivante : http://parasitipedia.net/; et sur le site internet European Scientific Counsel Companion Animal Parasite (ESCCA) à l'adresse suivante : http://www.esccap.org/

Un objet de l'invention concerne également un procédé ou une méthode d'administration à un animal d'une composition telle que définie ci-dessus, caractérisé en ce qu'il comprend une étape consistant à appliquer la composition à rebrousse-poil sur la peau de l'animal. De préférence, la composition est appliquée en continu dans le procédé ou la méthode d'administration. Avantageusement, la composition est appliquée à rebrousse-poil en continu à partir de la base de la queue, le long de l'épine dorsale jusqu'au niveau des omoplates de l'animal.

Un autre objet de l'invention concerne aussi l'utilisation d'une composition dans la préparation d'un médicament dans le traitement contre un ectoparasite ou un endoparasite animal, caractérisée en ce que la composition est administrée par voie externe sur la peau d'un animal par application à rebrousse-poil. La composition est de préférence appliquée en continu, et d'une manière encore plus préférée, appliquée à rebrousse-poil en continu à partir de la base de la queue, le long de l'épine dorsale jusqu'au niveau des omoplates de l'animal.

Un objet de l'invention concerne également un procédé ou une méthode de traitement contre un parasite d'administration chez un mammifère non-humain, comprenant l'application d'une composition antiparasitaire à rebrousse-poil sur la peau de l'animal. De préférence, la composition est appliquée en continu. Avantageusement, la composition est appliquée à rebrousse-poil en continu à partir de la base de la queue, le long de l'épine dorsale jusqu'au niveau des omoplates de l'animal.

L'invention peut être utilisée à titre préventif ou curatif.

D'autres aspects et avantages de l'invention apparaîtront à la lecture des exemples qui suivent, qui doivent être considérés comme illustratifs et non limitatifs.

### EXEMPLES

### Exemple 1 : Comparaison de surface de peau traitée entre l'application « spot-on » et l'application rebrousse-poil de l'invention par rebrousse-poil en fonction de la taille d'un chien.

Conformément à la notice d'utilisation des produit Vectra 3D (Ceva Animal Health USA) et en fonction du poids de l'animal, on réalise un à quatre dépôts de type « spot on » à l'aide d'une pipette de contenant de 0,8 à 8 mL de produit.

Ainsi, et comme cela est indiqué dans le tableau 1 : un animal XS présente un poids compris entre 1.5 et 4 kg et recevra en un point 0,8 ml du produit.

Le rayon de la surface de contact après application en « spot-on » est mesurée et la surface traitée de peau du chien est calculée selon la formule suivante : S = πR², avec S représentant la surface de contact en mm² et R représentant le rayon de la sphère par spot.

On réalise une administration par rebrousse-poil à l'aide des mêmes pipettes allant de 0,8 mL à 8 mL. Le volume de produit contenu dans les pipettes est délivré en continu sur une ligne à rebrousse-poil, soit une succession infinie de points. La largeur de la ligne après administration est mesurée et est égale à 20 ± 2 mm. La surface de peau immédiatement traitée du chien est calculée par rapport à la longueur du dos.

Les résultats sont illustrés dans le tableau 1 ci-dessous.

**Tableau 1 :**

| | | | | | |
|---|---|---|---|---|---|
| **Vol pipette (mL)** | **8** | **4.7** | **3.6** | **1.6** | **0.8** |
| **Taille** | **XL** | **L** | **M** | **s** | **XS** |
| | | | | | |
| **SPOT-ON** | | | | | |
| Nb spots | 4 | 3 | 2 | 2 | 1 |
| volume par spot (mL) | 2 | 1.6 | 1.8 | 0.8 | 0.8 |
| R= sphere rayon par spot (mm) | 7.8 | 7.2 | 7.5 | 5.8 | 5.8 |
| S= surface contact (mm²) | 767.5 | 652.2 | 715.5 | 416.7 | 416.7 |
| **Surface totale (mm²) (Nb spots*S)** | **3070** | **1957** | **1431** | **833** | **417** |
| | | | | | |
| **Rebrousse-poil** | | | | | |
| Longueur dos (mm) | 600 | 400 | 300 | 250 | 200 |
| Largeur de ligne (mm) | 20 | 20 | 20 | 20 | 20 |
| **Surface totale (mm²)** | **12000** | **8000** | **6000** | **5000** | **4000** |
| **Ratio de surface (Rebrousse-poil** / **spot-on)** | **4** | **4** | **4** | **6** | **10** |

Au vu des résultats du tableau 1, les inventeurs ont démontré que selon le volume utilisé (de 0,8 mL à 8 mL) et donc de la taille de la pipette, la surface de peau immédiatement traitée pour un même volume avec une application par rebrousse-poil est 4 à 10 fois supérieure à la surface de peau traitée avec une application de type « spot-on ». A noter que plus le chien est petit (Colonnes S et XS), et plus la différence entre les surfaces de peau immédiatement traitée est importante.

Les produits administrés sur la peau des animaux peuvent induire des effets secondaires et notamment des réactions de type inflammatoire sur les zones immédiatement traitées, recevant une forte quantité de produit en un court intervalle de temps. Ces réactions sont souvent liées avec la quantité de produit délivrée sur une même surface de la peau. L'exemple 1 montre que la surface de peau traitée *via* une application par rebrousse-poil est 4 à 10 fois supérieure que la surface de peau traitée *via* une application « spot-on » réduisant par voie de conséquence les effets secondaires de type inflammatoires par rapport une application « spot-on ».

L'application par rebrousse-poil en vertu de l'augmentation de surface de peau traitée, diminue également la durée de séchage car le contact entre la peau traitée et l'air est augmenté.

L'application par rebrousse-poil permet donc un séchage rapide du produit et une surface de peau traitée plus importante ce qui permet, par voie de conséquence, de stabiliser le produit sur la peau par rapport à une application par « spot-on ». Ceci permet donc de réduire les risques de contamination des propriétaires lors des contacts avec la zone traitée. Ceci permet également de réduire le risque d'ingestion par l'animal ou ses congénères par léchage.

### Exemple 2 : Comparaison des pertes de produit par coulure entre l'application « spot-on » et l'application par rebrousse-poil de l'invention.

On réalise une application de type par rebrousse-poil d'un volume de 3,6 mL de Vectra 3D (Ceva Animal Health USA), sur un groupe de 8 chiens de race Beagles. On réalise également une application de type « spot-on » par application du même volume de Vectra 3D, à savoir 3,6 mL réparti sur 2 sites (omoplates et base de la queue) sur un groupe de 8 chiens de race Beagles.

Le nombre de gouttes tombant des chiens est mesuré dans les 60 minutes suivant l'administration.

On observe aucune goutte qui tombe chez aucun des 8 chiens pour lesquels l'administration a été réalisée via une application par rebrousse-poil alors que des gouttes tombent chez 3 des 8 chiens pour lesquels l'administration a été réalisée via une application « spot-on ». Les inventeurs ont donc montré que l'administration par rebrousse-poil permet de réduire les pertes de produits par coulure.

### Exemple 3 : Comparaison de l'efficacité de l'application « spot-on » et de l'application par rebrousse-poil de l'invention contre des puces.

Des chiens de race mixte sont sélectionnés 8 jours avant le lancement de l'expérience pour leur capacité à retenir des puces après une infestation expérimentale par 100 puces *Ctenocephalides felis* adultes. Les puces vivantes sont comptées sur les chiens 48 heures après chaque infestation 6 jours avant le lancement de l'expérience, seuls les chiens retenant plus de 60% des puces sont sélectionnés. Trois groupes de 6 chiens homogènes sont alors constitués sur leur capacité de rétention en puces. Les 6 chiens sélectionnés pour chaque groupe sont ensuite infestés par 100 puces à jour -1, 0, +7, +14, + 21 et + 28. A jour 0, du Vectra 3D (Ceva Animal Health USA), à la dose minimale de 0,12 mL/kg de poids vif) est administré *via* une application « spot-on » sur un groupe de 6 chiens et *via* une application par rebrousse-poil sur un groupe de 6 chiens ; le dernier groupe de 6 chiens servant de contrôle. Les groupes « spot-on » et par rebrousse-poil sont comparés par un test U de Mann-Whitney réalisés à jour 30. Les résultats sont illustrés dans le tableau 2 ci-après.

**Tableau 2 :**

| **Chiens** | **Groupes** | **Puces vivantes sur les chiens à jour 30 (n)** |
|---|---|---|
| 1 | Contrôle | 80 |
| 2 | Contrôle | 86 |
| 3 | Contrôle | 98 |
| 4 | Contrôle | 85 |
| 5 | Contrôle | 76 |
| 6 | Contrôle | 88 |
| 7 | Spot-on | 5 |
| 8 | Spot-on | 6 |
| 9 | Spot-on | 5 |
| 10 | Spot-on | 6 |
| 11 | Spot-on | 2 |
| 12 | Spot-on | 3 |
| 13 | Rebrousse-poil | 0 |
| 14 | Rebrousse-poil | 0 |
| 15 | Rebrousse-poil | 0 |
| 16 | Rebrousse-poil | 0 |
| 17 | Rebrousse-poil | 1 |
| 18 | Rebrousse-poil | 0 |

Au vu des résultats du tableau 2, le nombre de puces est significativement inférieur (p=0,002) avec l'application par rebrousse-poil par comparaison avec l'application « spot-on ». Les inventeurs ont donc démontré la supériorité résiduelle de l'application par rebrousse-poil par rapport à l'application « spot-on ».

Au vu des exemples 2 et 3, les inventeurs ont démontré une meilleur efficacité de l'application par rebrousse-poil en comparaison avec l'application « spot-on » par la réduction des pertes de produit par coulure et par l'amélioration de l'efficacité du produit sur les puces.

### Exemple 4: Comparaison de la durée d'administration d'une composition de l'invention via l'application « spot-on » et via l'application par rebrousse-poil

36 chiens ayant un poids vif de 15,8 kg ± 1,2kg sont répartis en 2 groupes. Le premier groupe de 18 chiens est traité en administrant du Vectra 3D (Ceva Animal Health USA), *via* l'application « spot-on » et le second groupe de 18 chiens *via* l'application par rebrousse-poil. La durée d'administration a été chronométrée pour chaque chien entre le moment où le percuteur de l'applicateur transperce l'opercule et le moment où la pipette est vide.

Les résultats sont illustrés dans le tableau 3 ci-dessous.

**Tableau 3 :**

| **Chiens** | **Groupes** | **Durée (s)** |
|---|---|---|
| 1 | Spot-on | 35 |
| 2 | Spot-on | 32 |
| 3 | Spot-on | 30 |
| 4 | Spot-on | 28 |
| 5 | Spot-on | 36 |
| 6 | Spot-on | 33 |
| 7 | Spot-on | 29 |
| 8 | Spot-on | 25 |
| 9 | Spot-on | 39 |
| 10 | Spot-on | 33 |
| 11 | Spot-on | 36 |
| 12 | Spot-on | 29 |
| 13 | Spot-on | 37 |
| 14 | Spot-on | 30 |
| 15 | Spot-on | 30 |
| 16 | Spot-on | 28 |
| 17 | Spot-on | 38 |
| 18 | Spot-on | 28 |
| 19 | Rebrousse-poil | 17 |
| 20 | Rebrousse-poil | 8 |
| 21 | Rebrousse-poil | 16 |
| 22 | Rebrousse-poil | 15 |
| 23 | Rebrousse-poil | 15 |
| 24 | Rebrousse-poil | 9 |
| 25 | Rebrousse-poil | 12 |
| 26 | Rebrousse-poil | 10 |
| 27 | Rebrousse-poil | 15 |
| 28 | Rebrousse-poil | 8 |
| 29 | Rebrousse-poil | 10 |
| 30 | Rebrousse-poil | 9 |
| 31 | Rebrousse-poil | 8 |
| 32 | Rebrousse-poil | 13 |
| 33 | Rebrousse-poil | 8 |
| 34 | Rebrousse-poil | 9 |
| 35 | Rebrousse-poil | 11 |
| 36 | Rebrousse-poil | 9 |

Au vu des résultats du tableau 3, les inventeurs ont montré que la durée d'administration par l'application « spot-on » (32,0 ± 4,1 secondes) est plus longue que la durée d'administration par l'application par rebrousse-poil (11,2 ± 1,3 secondes).

L'application « spot-on » nécessite d'écarter le poil de l'animal à chaque point d'application avec une main et d'appliquer le produit avec l'autre main. Il n'est donc pas possible de contenir l'animal pour un utilisateur isolé, or celui-ci ne doit pas bouger afin de permettre une application correcte du produit.

L'application par rebrousse-poil permet d'administrer le produit en un seul geste. Une main maintient l'animal contre l'utilisateur et l'autre main applique le produit en remontant du bas vers le haut sur la ligne du dos. Cette ergonomie d'application permet une action rapide, en cohérence avec la variabilité de comportement des animaux.

## Revendications

1. Composition vétérinaire pour son utilisation dans le traitement contre un ectoparasite ou un endoparasite animal, **caractérisée en ce que** la composition est administrée par voie externe par application à rebrousse-poil sur la peau d'un animal.

2. Composition pour son utilisation selon la revendication 1, **caractérisée en ce que** la composition est appliquée en continu.

3. Composition pour son utilisation selon la revendication 1 ou 2, **caractérisée en ce que** la composition est appliquée à rebrousse poil en continu à partir de la base de la queue, le long de l'épine dorsale jusqu'au niveau des omoplates.

4. Composition pour son utilisation selon l'une quelconque des revendications 1 à 3, **caractérisée en ce que** l'ectoparasite animal est un arthropode.

5. Composition pour son utilisation selon la revendication 4 **caractérisée en ce que** l'arthropode est une puce, un moustique, un phlébotome, une mouche ou une tique.

6. Composition pour son utilisation selon l'une quelconque des revendications 1 à 3 **caractérisée en ce que** l'endoparasite animal est un nématode, un cestode ou un trématode.

7. Composition pour son utilisation selon l'une quelconque des revendications 1 à 6, **caractérisée en ce que** l'animal est un chien ou un chat.

8. Composition pour son utilisation selon l'une quelconque des revendications 1 à 6, **caractérisée en ce que** l'animal est une vache, un cheval, un cochon ou un mouton.

9. Composition pour son utilisation selon l'une quelconque des revendications 1 à 8, **caractérisée en ce que** la composition est formulée sous forme de dose unitaire adaptée au poids et/ou à la taille de l'animal, et **en ce que** l'intégralité de la dose est appliquée sur l'animal.

10. Composition pour son utilisation selon l'une quelconque des revendications 1 à 9, **caractérisée en ce que** la composition comprend au moins un agent antiparasitaire et un excipient vétérinairement acceptable.

11. Composition pour son utilisation selon la revendication 12 **caractérisée en ce que** l'agent antiparasitaire est choisi parmi les lactones macrocycliques, les organochlorines, les organophosphates, les carbamates, les amidines, les pyrethroïdes, les benzylurés, les phenylpyrazoles, les néonicotinoïde, les spynosines, les régulateurs de la croissance d'insectes (IGR), les benzimidazoles, les imidazothiazoles, les tétrahydropyrimidines, les isoquinolines, les isoxazolines, les salicylanilides, le clorsulon, le monepantel, le nitroxinil, la cyromazine, le dicyclanil, et le metaflumizone.

12. Composition pour son utilisation selon la revendication 11, **caractérisée en ce que** l'agent antiparasitaire est un néonicotinoïde, un pyréthoïde, ou un régulateur de la croissance d'insecte.

13. Composition pour son utilisation selon la revendication 12, **caractérisée en ce que** le neonicotinoïde est le dinotefuran.

14. Composition pour son utilisation selon la revendication revendication 11, **caractérisée en ce que** l'agent antiparasitaire est un phenylpyrazole, préférentiellement le fipronil.

15. Composition pour son utilisation selon la revendication 11, **caractérisée en ce que** l'agent antiparasitaire est un isoxazoline, préférentiellement le 4-{5-[3-chloro-5-(trifluoromethyl)phenyl]-5-(trifluoromethyl)-4,5-dihydroisoxazol-3-yl}-N-{2-oxo-2-[(2,2,2 trifluoroethyl)amino]ethyl}naphthalene-1-carboxamide, le 4-[5-(3,5-dichlorophenyl)-5-(trifluoromethyl)-4,5-dihydro-1,2-oxazol-3-yl]-2-methyl-N-{2-oxo-2-[(2,2,2-trifluoroethyl)amino]ethyl}benzamide ou le N-{2-chloro-{5-(3,5-dichlorophény 1)-5-trifluorométhyl-4,5-dihydroisoxazol-3-yeenzyl}cyclopropanecarboxylique.
